(19)

Europäisches
Patentamt
European
Patent Office
Office européen
des brevets

(11) **EP 2 187 615 A2**

(12) **EUROPEAN PATENT APPLICATION**

(43) Date of publication:
**19.05.2010 Bulletin 2010/20**

(51) Int Cl.:
***H04N 1/405*** *(2006.01)*

(21) Application number: **09168581.8**

(22) Date of filing: **25.08.2009**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA RS**

(30) Priority: **14.11.2008 EP 08169146**

(71) Applicant: **EMPA Dübendorf
8600 Dübendorf (CH)**

(72) Inventors:
 • **Stamm, Tobias
  8600, Dübendorf (CH)**
 • **Simon, Klaus
  8600, Dübendorf (CH)**

(74) Representative: **Engelhard, Maximilian
  Schwabe, Sandmair, Marx
  Patentanwälte,
  Stuntzstrasse 16
  81677 München (DE)**

(54) **FM-Halftoning with surrounding-influenced quantization and lazy propagation**

(57)    The present invention refers to an image data processing method for processing input image data representing input color pixels of an input color image to be reproduced wherein the image data processing method uses an error diffusion process in order to produce output binary image data which represent an output binary image which represents a processed binary version of the input color image, the output binary image comprising output pixels having output binary color values; process pixels are determined by the error diffusion process, which process pixels constitute a process image and which respectively have a process color value, wherein the error diffusion process uses the process pixels in order to process the input color pixels step by step in order to stepwise determine the output binary values of the output pixels by quantization; wherein the process pixel determined from that one of the input color pixels which is processed in a current one of the steps is a current process pixel, **characterised in that** the following is performed in the current step: a) a current binary color value is set for a current output pixel which corresponds to the current process pixel; b) a plurality of reproduction color values of particular ones of the output pixels are respectively calculated based on output binary color values determined in previous steps and based on the current binary color value; c) an error indicator is determined based on a plurality of provisional quantization errors, said provisional quantization errors are calculated based on the differences between the reproduction color values of the particular output pixels and the process color values of the process pixels corresponding to the particular output pixels; wherein the steps a), b) and c) are repeated for different current binary color values; and, for quantization of the current pixel, that one of the different current binary color values is selected as output binary color value for the current output pixel for which the error indicator indicates the smallest error.

Figure 1

**Description**

**1 State of the art**

The present invention relates to an image data processing method for quantizing image data. The method uses error propagation techniques, in particular FM-halftoning techniques, also known as non-periodic (NP) raster. It is referred to the state-of-the-art description listed in patent application EP 08169146.1, "Image data processing for printing" by T. Stamm and K. Simon. This application is incorporated by reference. In particular FM-halftoning is described in this application.

Furthermore, it is referred to a recently published paper by T. Stamm, K. Simon: "Dotgain estimation using linear least squares incorporating neighboring and clustering effects", Electronic Imaging Conference 2009. In this paper, a possible way to predict the luminance of a given $k \times k$ cell with high accuracy is presented. The resulting parameterized prediction algorithm of that paper has been used to successfully reproduce colorimetric accurate patches by applying the present inventive algorithm which will be described later.

**2 Introduction**

Reproduction devices are able to create an output representation of a given input. Image reproduction devices accept an input image as input data and create an output image as output data. Due to this, such devices often are called output-devices.

A reproduction device uses one or more primary colors which are commonly known as *channels*. A linear color model assumes the reproduction device to produce a linear color response per channel. Such devices are also referred to as *ideal devices* and are not existent in real life, although some reproduction devices reproduce an almost linear response (for example color displays).

Several reproduction devices (like for example many printing devices) only have the ability to either reproduce or not reproduce a dot of one particular primary color at a specific position. In other words, these reproduction devices either produce no color or full color which sometimes is referred to as *full color tone*. This means, the color value of one primary color at a specific position can be represented by a binary value {0, 1}. When a reproduction device uses more than one channel, the color at a specific position can be represented by a set of binary values (one binary value for each channel). In this invention, such a set of binary values describing the color at a specific position is called a *binary color value*. If the set of binary values describe the color of an output pixel of the output image, then the set is called "output binary color value".

In the case of CMYK-reproduction, theoretically up to 16 combinations of the color channels can be made and therefore there exist 16 possible binary color values. Nontheless not all of those 16 values may be desirable, like, for example, the combination of all channels C+M+Y+K which results in many printers in a ink coverage which is too high. Depending on other needs and experience values, the number of output binary colors actually used can be greatly reduced. The final set of used output binary color values is called the set of *possible output binary color values*. We refer here for example for CMYK printers to a set of 8 output binary color values which resulted in very good color reproduction during tests: {U=uncolored=white, C=cyan, M=magenta, Y=yellow, C+M=blue, C+Y=green, M+Y=red, K=black}.

With real life devices, the resulting color in reproducing a binary color value is higly dependant on the surrounding of the reproduction position. The color value resulting in reproducing the binary color value with an appropriate reproduction device with incorporation of its surrounding is called the *reproduction color value*. In this invention, such reproduction color values have been gathered in a lookup table using measurements of reproductions of appropriate color patches or can be predicted using appropriate models.

The main purpose of a halftoning algorithm is to create a *binary output image* consisting of output binary color values which, when reproducing with an appropriate reproduction device, result in an approximation of a given continuous input image. The determination, which output binary color value to use at a specific position based on a given continuous color value is called *quantization*. The difference between the desired continuous color value and the reproduction color of the determined output binary color value is called *quantization error*.

**3 Summary of Invention**

The object of the invention is to provide an image data processing method, a corresponding program and a data storage medium storing the program which, when applied to an input image, results in an output image having a good image quality although quantization of the input color values of the input image has been performed.

The aforementioned object is solved by the subject-matter of the independent claims. The dependent claims are directed to embodiments of advantage.

**4 Advantages and Embodiments**

The present invention is directed to an image data processing method for processing input image data representing input color pixel of an input color image to be reproduced, in particular printed. Examples for reproduction devices which reproduce the input color image are monitors, displays, beamer, embossing machines, (photographic) exposing machines etc. The image data processing method according to the invention uses an error diffusion process which is also known under the term of "error propagation". The error diffusion process implies in particular a quantization of the input color pixels in order to produce output binary image data. The output binary image data represents an output binary image. The output binary image represents a processed binary version of the input color image. In other words, the output binary image results from quantization of the input color image. The output pixels which constitute the output binary image have output binary color values. The input color pixels constitute the input image. The input color pixels have input color values.

According to the invention, preferably, process pixels are determined by the error diffusion process. These process pixels define the process image (working image E) which will be discussed later. The process pixels have process color values.

In the following, if a first pixel of a first pixel type is said to "correspond" to a second pixel of a second pixel type, then the first pixel has a location in a first image which is constituted by the pixels of the first type which location is identical to the location of the second pixel in a second image which is constituted by pixels of the second type. For instance an input pixel is said to correspond to an output pixel if the input pixel has the same location in the input image as the output pixel has in the output image. Another example is that in case a process pixel is said to correspond to an output pixel, then the process pixel has the same location in the process image (working image) as the output pixel has in the output image.

In particular, the process color value of the process pixel is the sum of the color value of the input color pixel which corresponds to the process pixel and the propagation error color value which was propagated to the process pixel by the error diffusion process. The propagation error propagated to the process pixel is a weighted sum of quantization error of neighboring pixels whereas the quantization error of a neighboring pixel results from the difference between the reproduction color value of the output binary color value of that neighboring pixel and the process color value of that neighboring pixel. According to the invention, the quantization error used for computation of the propagation error is in particular the "latest interim quantization error" or the "final quantization error" which will be discussed later. A propagation error or quantization error may be any kind of error (see definition below) which may be calculated in different manners. These errors and other errors mentioned herein represent preferably color values if not specified differently.

The process pixels and in particular the working image is used in accordance with the invention in order to process the input color pixels step by step in order to stepwise determine the output binary color values of the output pixels by quantization. As will be explained later, in accordance with one important embodiment of the invention, not every process step which results in a quantization of a process pixel, i.e. which results in the determination of an output binary color value of an output pixel is obligatorily linked with the propagation of an error. This optional processing is called herein lazy propagation and will be discussed later.

Preferably, to each of the output pixels, a process pixel is "assigned". This means that the output pixel resulted from the assigned process pixel by quantization. In particular this assigned output pixel corresponds to the process pixel, i.e. has the same location in the output binary image (output image O) as has the process pixel in the process image (working image E).

Furthermore, preferably, to each of the process pixels, an input pixel is assigned. This means that the process pixel derived from the assigned input pixel by the error diffusion process. In particular, this assigned process pixel corresponds to the input pixel, i.e. has the same location in the process image (working image E) as has the input pixel in the input image (input image I).

As mentioned above, preferably, the output binary values are determined stepwise. A current one of these steps is called a current step. The process pixel which is processed in the current step is called current process pixel. The current step may comprise several substeps. Examples for the substeps are the following steps a), b) and c) which will be explained below. Preferably, the step a) is performed before the step b) and the step b) is preferably performed before the step c).

In the step a), preferably, a current binary color value is set for the current output pixel. This current binary color value may be one of a limited list of binary color values which are called possible binary output colors. That is, according to one embodiment, the current binary color value can only be one of a predefined set of possible current binary color values. According to another embodiment, the current binary color value may be calculated by using a mathematical function. In particular, it may be calculated based on the process color value of the current process pixel or the corresponding input pixel and/or based on the process color values of neighboring and/or surrounding pixels. Neighboring pixels are pixels which are close to the pixel to which they are neighbors. The neighboring pixel may directly adjoin the pixel to which they are a neighbor or may be several pixels away, i.e. other (in particular neighboring) pixels may be between a neighboring pixel and the pixel to which the neighboring pixel is the neighbor. The distance between a neighboring pixel and the pixel to which it is neighbor may be (measured in units of pixels from pixel center to pixel center) for instance larger than 0 or 1 or 2 pixels and smaller than 20, 10 or 5 pixels. A neighboring pixel may be a surrounding pixel. The difference between a surrounding pixel and a neighboring pixel is that the surrounding pixel is defined here to may be identical to the pixel which it surrounds. Furthermore, later, a particular example for surrounding pixels is that all surrounding pixels are within the image cell assigned to a pixel. A neighboring pixel may be inside or outside the image cell, i.e. the term "neighborhood" is not bound to the definition of an image cell. In particular for the case of propagation of an error from a specific process pixel to neighboring process pixels, the term neighborhood preferably excludes process pixels within the image cell of the specific process pixel.

The aforementioned different methods for determining the current binary color value may be combined.

In a step b), preferably, reproduction output color values of particular ones of the output pixels are determined. In particular, the particular output pixels include the current output pixel. The calculation of (each of) the reproduction output color values is based on the current binary color value of the current output pixel and on output binary color values of other output pixels, the output binary color values of which have already been determined in a previous step. Thus, in particular, the particular output pixels are selected such that the reproduction output color values of the particular output pixels are influenced by the current binary color value of the current output pixel. In other words, preferably, the particular output pixels are selected to be those output pixels, the reproduction color value of which is influenced by the color value of the current output pixel. As mentioned above, in particular, each of the reproduction color values is calculated based on a plurality of color values (determined binary output color values and/or assumed binary or continuous color values) of a plurality of output pixels. This plurality of output pixels is in particular those which are in a particular output image cell assigned to the particular output pixel for which the reproduction color value is determined. In particular, the reproduction color value is defined to be a color value of a particular output pixel which results from considering the influence of all output pixels in a particular output image cell on the reproduction color value of the particular output pixel, the particular output image cell being assigned to the particular output pixel.

In case of ideal printing, the output pixel would reproduce the color defined by the output binary color value of the output pixel according to the printer channels. This here is denoted as the quantitative, theoretical color value of the output pixel. As real printers are not ideal, the reproduction color value represents in particular the perception to be expected for a dot when printing the output pixel. According to the invention, the reproduction color value not just includes the quantitative theoretical color value of the output pixel but at least one additional information which results from the real printing process. This additional information may for instance depend on the real printing device and/or on the error diffusion process used for processing the pixels. In particular, the reproduction color value may be influenced by dotgain effects and/or by the color (binary values) of the surrounding dots and/or by the arrangement of the dots in the surrounding of a dot. This arrangement is in particular influenced by the error diffusion process itself. In particular the color of the surrounding dots depends on the output binary color values of the corresponding output pixels which surround the output pixel which corresponds to the dot. Therefore, according to the invention, the calculation of the reproduction color value is based at least on the output binary color values of surrounding output pixels.

The reproduction color values of particular output pixels generally change with a change of the current output binary color value. Thus the calculated reproduction color values are considered to be "provisional" and quantization errors calculated based on these provisional reproduction color values are called "provisional quantization errors". The reproduction color values are influenced by output binary color values selected previously for an output pixel. Generally, the particular output pixel may have an arbitrary spatial relationship towards the location of the current output pixel. Preferably, this spatial relationship complies with particular rules and/or patterns. In particular, the spatial relationship depends on the definition of output image cells and/or surroundings which will be explained later. In particular, the particular output pixels are "indirect-surrounding" output pixels which indirectly surround the current output pixel as will be explained later. The reproduction color value represents preferably a prediction of the reproduction color value of the output pixel. Preferably color values (in particular output binary values) of neighboring output pixels are considered for calculation of the reproduction color value. With respect to the preferred spatial relationship between the neighboring output pixels and the current pixel, further details will be given below. The process pixels which correspond to the particular output pixels are called particular process pixels.

In a step c), preferably, the provisional quantization errors are calculated for (all of) the particular process pixels. Then based on the provisional quantization errors an error indicator is determined. A provisional quantization error for a particular process pixel is calculated based on the difference between the (provisional) reproduction color value and the color value of the corresponding particular process pixel. Thus, a plurality of provisional quantization errors are calculated for a plurality of particular process pixels. Then, based on the plurality of provisional quantization errors, an error indicator is determined. In particular, this error indicator gives an overall indication so that a relative increase or decrease of the provisional quantization errors may be assessed. This increase or decrease is due to a change of the current output binary color value.

Preferably, the steps a), b) and c) are repeated for different current binary color values. The different current binary color values, which are set in the step a), may be determined in the different manners as explained above. Finally, in order to perform the quantization of the current process pixel, one of these different current binary color values is selected. This is the so called "selection step". Preferably, that one of the different current binary color values is selected as output binary color value for which the error indicator indicates the smallest error. The error indicator is preferably calculated by applying a sum operator to the provisional quantization errors. In particular the total sum or a weighted sum of the provisional quantization errors for the particular process pixels is calculated by applying the sum operator and represents the error indicator. The selection step which corresponds to a quantization, preferably includes that the current output binary pixel value is set to the selected output binary value and, after setting the selected binary value, the current output pixel is defined to be fixed, i.e. that output binary color value which has been selected for the current output pixel will not be changed. The provisional quantization errors which (for the plurality of particular process pixels) resulted from the selected output binary color value (determined in the selection step) will be called "latest quantization errors". Thus, the selection step results in that there are a plurality of latest quantization errors for a plurality of particular process pixels. Each one of the latest quantization errors is defined to be the difference between the process color value of a particular process pixel and the reproduction color value of a corresponding particular output pixel, the calculation of the reproduction color value being based on the selected output binary color value. According to an embodiment of the invention, the process color value of the particular process pixels may change in particular under certain conditions. Furthermore, the reproduction color values of the particular output pixels also may change. The reproduction color values of particular output pixels may change since these values may be calculated based on output color values of unfixed output pixels. The process color value of the particular process pixel may change if a quantization error is propagated to the process pixel. This is in particular possible if the quantization error of that particular process pixel has not yet been propagated, i.e. if the particular process pixel is a specific process pixel (the definition of a "specific process pixel" is given later). Thus, the latest quantization errors may change due to a change of the process color value of the particular process pixels and may change due to a change of the reproduction color value of the particular output pixels. If the latest quantization error can change potentially, the latest quantization error is called in the following "interim quantization error". An "interim quantization error" which can no longer change is called a "final quantization error".

As mentioned above, the reproduction color value may change. In order to keep this change of the reproduction color value as small as possible, preferably, the (final) reproduction color value is predicted based on assumptions for unfixed output pixels, i.e. for output pixels which do not have an output binary color value which resulted from the quantization. Thus, according to the invention, the reproduction color value is in particular a predicted reproduction color value. Such a predicted reproduction color value is also called "predictive output color value". The prediction is in particular based on assumptions for unfixed output pixels in the surrounding of an output pixel for which the reproduction color value is predicted. This will be explained in more detail later.

As mentioned above, preferably the spatial arrangement of the particular output pixels with respect to the current output pixel complies to rules of spatial arrangement. Preferably, the spatial arrangement is such that the particular output pixels are output pixels which have the current output pixel in their surrounding. Preferably, one of the particular output pixels is the current output pixel. Furthermore, preferably, the expression "surrounding of a pixel" is defined to encompass both pixels which are close to the pixel and the pixel itself. That is, if a pixel is said to surround a pixel, the two pixels may be identical.

Preferably, the particular output pixels are output pixels which have the current pixel in their surrounding. If an output pixel complies to this rule of special arrangement, the output pixel is said to "indirect-surround" the current output pixel. In other words, the particular output pixels are preferably output pixels which indirect-surround the current output pixel.

Preferably, the surrounding of an output pixel is defined by an output image cell. Preferably, one output image cell is assigned to each of the output pixels.

The output image cells are defined to comprise surrounding output pixels including the one pixel to which the image cell is assigned to. That one pixel is the anchor pixel of the output image cell. An output pixel is defined to be a surrounding output pixel of the current output pixel if the output image cell of the current output pixel includes this output pixel. On the other hand, a current output pixel defines an indirect-surrounding cell comprising output pixels containing the current pixel within their surrounding. In other words, an output pixel is an indirect-surrounding output pixel if the output image cell of the output pixel includes the current output pixel. On the other hand, an output pixel is an indirect-surrounding output pixel, if it is contained in the indirect-surrounding cell of the current pixel. This means that the indirect-surrounding cell of a current pixel is based on output pixels containing the current pixel in their respective surrounding. The current output pixel is one example for an indirect-surrounding output pixel. The reproduction color value of one pixel is preferably calculated based on the output color values of the output pixels in an output image cell assigned to that pixel, which (output image cell) in other words is the surrounding of that pixel.

One embodiment of substep c) defines a cell to be the surrounding of an output pixel. Thus, for each one of the indirect-surrounding output pixels of the current output pixel, the reproduction color value is calculated based on the output color values of the output pixels in the output image cell which is assigned to the indirect-surrounding output pixel.

Thus, one indirect-surrounding output pixel has a reproduction color value which may be based on several different output color values of the output pixels in the output image cell of the indirect-surrounding output pixel. Thus, the (predicted) reproduction color value of the indirect-surrounding output pixel may be identical or close to the final reproduction color value of the indirect-surrounding output pixel. The selection of the output binary color value is preferably based on the (total or weighted) sums of the provisional quantization errors (according to previous steps c)) of all indirect surrounding pixels of the current output pixel. The steps c) have been performed for a set of different current binary output values. In particular, that one of the set of current output binary color values is selected which results in the smallest sum. The weights of the sum may be defined by the cell influence values of the indirect-surrounding cell of the current pixel as explained later. The indirect-surrounding cell of a current pixel is defined by the output pixels which contain the current pixel in their surrounding. The influence values of an indirect-surrounding cell of a current pixel describe an indirect cell influence and are defined by influence values of the surrounding cells of each one of the indirect-surrounding pixels, whereas the influence value chosen for one particular indirect-surrounding pixel preferably is the one of the cell-influence-filter of the image cell of that particular indirect-surrounding pixel at the location of where the current pixel would be within the image cell of the particular indirect-surrounding pixel.

It may often be the case that not all output color values of an image cell have already been determined. The "determination" means in particular that the output binary color value has been selected and/or fixed as explained above. If not all output binary color values have been determined, then the remaining output pixels may be disregarded when calculating the predictive output color value. According to another embodiment, color values may be assumed for those output pixels (also referred to as "assumed output pixels"), for which the color value has not yet been determined. These assigned output color values may be binary, i.e. output binary color values but are not necessarily output binary color values. In particular they may be a continuous (i.e. non-binary) color value. There are different possibilities how the assumed color values may be determined. For instance, the assumed color value of an assumed output pixel may be equal to the process color value of the process pixel which corresponds to the current pixel or the assumed output pixel for which an output binary color value has not yet been determined. According to another embodiment, the assumed color value is set to be equal to 0. According to a further embodiment, the assumed color value is equal to the input color value of the input pixel which corresponds to the current or assumed output pixel. According to another embodiment the assumed color value is set to be equal to the output binary color value of a mirrored output pixel for which the output binary color value is already determined. A mirrored output pixel is the output pixel which has a mirrored location. This mirrored location results for example from mirroring the location of the assumed output pixel at the location of the current output pixel.

When calculating the predictive color value, this may be done by simply adding the output binary color values of the output pixels in the output image cell and dividing by the number of output pixels. In addition, the above-mentioned assumed output pixels may be considered for this calculation. However, according to a further embodiment, the different output binary color values and/or the assumed color values may be weighed for instance in dependence on their location in the output image cell. They may be also weighed in dependence on their certainty (explained later).

As mentioned above, according to an embodiment, propagation of the quantization error has not to be performed immediately after a quantization step. Preferably, the latest quantization error is declared to be the valid interim quantization error which is meant to be propagated. According to this particular embodiment, the propagation of the latest quantization error is only performed from a process pixel to other process pixels under certain conditions. The condition is in particular that a predictive output color value calculated for the output pixel which corresponds to the particular process pixel has been determined to be based on a sufficient certainty of prediction.

Sufficient certainty means here that the certainty is determined to be above a threshold value which is called herein certainty threshold value. In which way the certainty may be calculated will be explained later. As long as the quantization error is not yet propagated from a process pixel which we call herein "specific process pixel" to other process pixels, the process color value of this specific process pixel may still change. However, preferably, the (selected) output binary color value of the output pixel corresponding to the specific pixel remains fixed. Also the latest quantization error of the specific process pixel may change. Preferably, after completing the propagation step by propagating the latest quantization error from the specific process pixel to other process pixels and preferentially adjusting the process color value of the specific process pixel so that it reflects the process color value after error propagation, a change of the process color value of the former specific process pixel is no longer possible and thus the former specific process pixel is no longer a specific process pixel. No more error can be propagated to that former specific process pixel.

Propagation of the latest quantization error from the specific process pixel to other process pixels is not restricted to process pixels adjoining the specific process pixel but the propagation may be to any process pixels, in particular to any process pixel in the neighborhood of the specific process pixel. The latest quantization error is a quantization error which may be the above-mentioned interim quantization error or the later explained final quantization error. Preferably, a propagation of the quantization error is only performed to process pixels which are not yet propagated and to those ones of the process pixels which are "uncertain". The term "uncertain" means herein that the certainty of prediction is not sufficient, i.e. below the certainty threshold value.

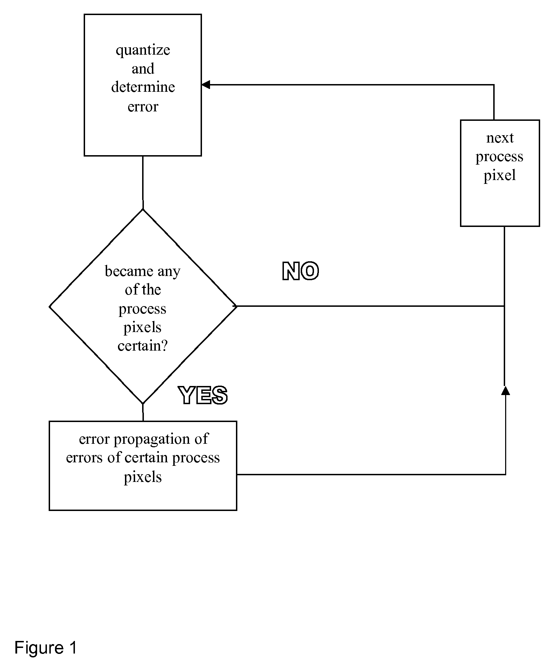

Figure 1 shows schematically the process of quantization, error determination and error propagation. If a current process pixel is quantized and the corresponding latest quantization errors of the particular process are determined, then, in a next step, it is checked whether any of the process pixels (in particular any of the particular process pixels) newly became certain due to the determination of a further output binary color value, i.e. the selection of the output binary color value for the current output pixel. If this is the case, the latest quantization errors of all of those newly certain process pixels are propagated and then a next process pixel becomes current process pixel. If none of the process pixels became certain, then a next process pixel becomes current pixel without performing an error propagation.

As mentioned above, output image cells may be defined for each of the output pixel. These output image cells may be used in order to determine the certainty of prediction. It is assumed that the certainty of prediction increases if the number of those output pixels in an output image cell increases for which an output binary color value has already been determined. Preferably, the certainty of prediction is calculated based on so-called cell influence values. The cell influence values reflect whether an output binary color value has been selected for the output pixel or not. In particular, the cell influence value of an output pixel may be one if the output binary color value has already been selected and may be zero if the output binary color value has not yet been determined. Nevertheless, the cell influence value may be more complex. In particular, the cell influence value may depend on the location of the output pixels in the output image cell, in particular in dependence on the distance to the output pixel which corresponds to the process pixel for which the certainty of prediction is to be determined. Generally, the cell influence values reflect the influence of one surrounding output pixel on the reproduction color value of the output pixel which it surrounds when printing the output pixels with the reproduction device.

The present invention is further directed to a program which when running on a computer or loaded in a computer causes the computer to perform the method as described in one of the embodiments described herein. Furthermore the invention is directed to a data storage medium (for instance CD, memory stick, ROM, RAM etc.) which stores the above-mentioned program. The invention is also directed to a signal wave which carries information which represents the above-mentioned program. Furthermore the invention is directed to a computer in which such a program is loaded or on which such a program is executed or which comprises the aforementioned data storage medium.

The present invention is also directed to a reproduction system (e.g. printing system) which includes a reproduction device (e.g. printer) and the aforementioned computer in which the aforementioned program is stored, loaded or running. Preferably, the computer includes an interface for inputting the input image data and an interface for outputting the output binary image data to the reproduction device (e.g. printer). The reproduction device (e.g. printer) is preferably constituted to reproduce (e.g. print) the output binary images (output images O) based on the output binary image data received from the computer.

## 5 Further advantages and embodiments

Advantageously, the quantization error is propagated to the neighborhood of the questioned pixel so that a later quantization of the neighboring pixels will result in a set of output binary color values which, when using integral measurements on the reproduced image, results in a more accurate approximation of the given continuous color value. As stated above, this propagation task is well known under the term *error propagation*. The quantization error of one image pixel is distributed and added to the process color of the neighboring pixels. The difference of the process color to the original color given by the input image is called *propagation error*.

Any error in this invention may be a set of scalar values which we call a vector. The *error length* is defined to be a positive scalar value which can be computed from the vector, for example, by using euclidian or manhattan distance or by applying an appropriate absolute-operator.

Preferably, three images are defined: The *input image I*, the *working image E* and the *output image O*. Preferably, all images preferably have the same *width* and *height* expressed in number of *pixels* on a two-dimensional grid. Preferably, every pixel in one of the images can be located by an *image coordinate (x,y)* whereas $x$ and $y$ define the position on the pixel-grid of the image whereas $x$ is within the range [0, width-1] and $y$ is within then range [0, height-1] whereas those ranges define the *image boundaries*. Every pixel with location in one image defined by an image coordinate within the image boundaries is called an *image pixel*. The image pixels with the same image coordinate in the three images are *corresponding pixels*.

Every image pixel defines a *pixel value*. An image pixel in the input image *I* (input image) defines the *original color value (input color value)*. An image pixel in the working image *E* (process image) defines the *desired color value*. As mentioned above, this color value is also called process color value. An image pixel in the output image *O* (output image) defines the *output color value*. Preferably, the color values of *I* and *E* are continuous color values, the color values of *O* are binary color values.

The color values of all three images may be described in different color spaces. The *input color space* is the color space of the input image and represents the color space given by the image passed to the algorithm. Common examples for an input color space are RGB, Lab, Greyscale, but theoretically, any color space may apply.

The *working color space* is the color space of the working image and represents a suitable color space for processing color values with respect to linearity, scalability, color distance and/or additivity. A working space preferentially describes a linear dependance between colors. A working space preferably defines a *zero-color* with the meaning that mathematically adding up the zero-color to a second color will result in the same second color. A working space also preferably defines a scalar multiplication operator whereas multiplying any color with *0* must result in the zero-color. Preferentially, the linear combination of any color with another color results in a range of colors with smallest possible variation with respect to color distances. As up till today, no perfect working space could have been identified to meet all those conditions, one uses approximated working spaces like Lab, HSV, IPT. Theoretically, any color space could be used as a working space but preferably only a few of them are considered to be suitable with respect to the points above.

The *output color space* is the color space of the output image and represents the color space reproducible by the reproduction device. Common examples for an output color space are CMYK, Greyscale, but theoretically, any color space may apply.

We assume that there exists a conversion between the three color spaces so that any input color can be represented by a working color or an output color and vice versa. We note that for most color spaces used today, such conversions exist, furthermore, standard color spaces like sRGB and Lab can be converted without any loss.

The pixel values of the image pixels in *I* preferably never change. Preferably, the pixel value of an image pixel (process pixel) in the working image *E* is defined by the value of the corresponding image pixel in *I* plus the propagation error which is the sum of all quantization errors propagated to this pixel coordinate. The pixel values of the image *E* may change during the runtime of the algorithm. The image pixels of the output image O define binary color values. Additionally, every image pixel of the output image O is marked to be either *fixed* or *not fixed.*

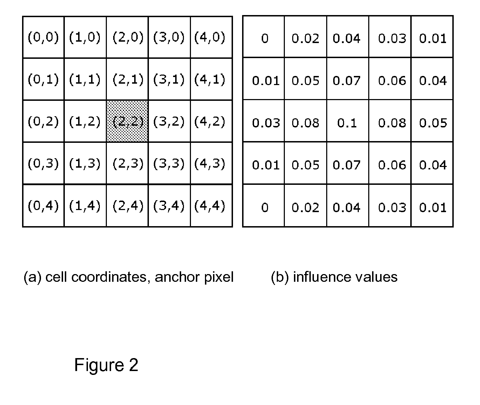

A *cell* defines a rectangular *pixel window* with size m×n whereas the pixels of the cell are called *cell pixels*. An example for a cell is the above-mentioned output image cell. Every cell pixel (e.g. output pixel of the output image cell) can be located within the cell by a *cell coordinate (u, v)*, whereas u is within the range [0, m-1] and v is within then range [0, n-1] (see Figure 2a). To each cell a matrix f is assigned which in this invention is called the *cell influence filter*. The matrix f contains scalar *influence values f(u,v)* between 0 and 1 (see Figure 2b) and the matrix f is normalized, which means, the sum of all influence values is 1. The scalar influence values are an example for the above-mentioned cell influence values.

A cell defines one *anchor pixel* located at the cell coordinate $(a_u, a_v)$ in the cell. Figure 2a shows the cell coordinates of a 5 × 5 cell with the anchor pixel at cell coordinate $(a_u, a_v) = (2, 2)$. In other words a cell is "assigned" to the anchor pixel. For instance an output image cell is assigned to a particular pixel, as mentioned previously. Furthermore, each anchor pixel defines the cell of which it is the anchor pixel. For instance, in this manner, an output pixel "defines" an output image cell.

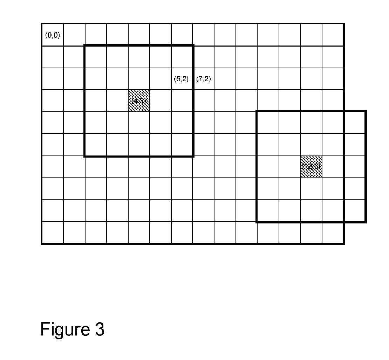

The pixel window defined by a cell can be placed on an image by locating the corresponding anchor pixel of the cell at a desired image coordinate *(x,y)*. Therefore, every cell pixel with cell coordinate *(u,v)* of a cell placed on an image at the image coordinate *(x,y)* defines a *corresponding image coordinate* $(x^0, y^0) = (x + u - a_u, y + v - a_v)$. On the other hand, every image pixel defines a pixel window containing image pixels forming the *corresponding cell* whereas the anchor pixel of that cell has the same corresponding image coordinate as the image pixel (see Fig. 3). Note that not every corresponding image coordinate of a cell pixel of an image cell may be inside the image boundaries. A cell placed on an image is called an *image cell* and its location inside the image will in the further text be expressed by the image coordinates of the anchor pixel.

As example in figure 3, the cell of figure 2a has been placed on two image coordinates: (4,3) and (12,6). As the width and height of the image in this example is 14 × 10, the image cell placed at position (12,6) is overlapping with the image boundaries and therefore, some cell pixels are outside the image boundaries.

The image pixels inside the pixel window of an image cell of an image pixel define the *surrounding* of that image pixel. When weighting the pixels in the cell with the previously defined influence values, the cell describes the *cell influence*, i.e. the influence of the output binary color value of each pixel in the cell on the reproduction color value of the anchor pixel. An image pixel in an image is declared to be *inside an image cell*, when one of the cell pixels of the questioned image cell has the same corresponding image coordinates as the image coordinates of the questioned pixel. Otherwise, the image pixel is declared to be *outside the image cell*. Correspondingly, a cell can *contain* or *not contain* a questioned image pixel. As an example in figure 3, the image pixel located at coordinate (6,2) is inside the image cell at coordinate (4,3), the image pixel located at coordinate (7,2) is outside the image cell.

An image cell is declared to be *completed*, when every image pixel in the output image which is inside the image cell, is marked as fixed. An image cell is declared to be *partially completed*, when at least one but not every image pixel in the output image which is inside the image cell, is marked as fixed. When no image pixel inside a cell is marked as fixed, the cell is declared as *empty*.

When an image cell is completed or partially completed, its reproduction color value after finishing the algorithm reproducing the completed image cell of the output image O on the reproducing device can be predicted. This reproduction color value can only be predicted with an amount of uncertainty. According to an embodiment, as mentioned above, a model for the *certainty* of a prediction will be incorporated. The certainty is for instance a value in the range of [0,1] whereas *0* means total uncertainty and *I* means total certainty. During the runtime of the algorithm, a certainty threshold value will be given, which for example may be 0.99 or even 1. Only cells that can be predicted with a certainty greater or equal than the the given certainty threshold value or which have been completed will be considered for error propagation. Suggestions of a model for the certainty of a prediction can be found in section 6.4.5.

Preferably, every completed output image cell defines a *final quantization error* which is the subtraction of the desired value given by $E(x,y)$ (i.e. the process color value of the process pixel at the image coordinate (x, y)) and the predicted reproduction color value of the output image cell, the anchor pixel of which is the output pixel which corresponds to the process pixel at the image coordinate (x, y). Every partially completed output image cell defines an *interim quantization error* the same way but as the cell is not completed, the prediction of the same cell may change in subsequent steps.

## 6 Particular Embodiment

As mentioned above, a particularly preferred embodiment is to quantize pixels (process pixels) depending on the interim quantization error determined for indirect-surrounding pixels (i.e. process pixels which contain the process pixel to be quantized within their surrounding) at the current state of the algorithm according to the selected one of the set of current binary output values. The current output binary color value is selected so that the sum of the provisional quantization errors for the indirect-surrounding process pixels (which indirect surround the process pixel to be quantized) becomes minimal whereas the sum in a further embodiment may be weighted according to the indirect cell influence, the prediction certainty of the indirect-surrounding pixels or other weighting parameters. The provisional quantization errors for which the sum became minimal are called latest quantization errors. These latest quantization errors are in particular interim quantization errors if they are calculated based on incomplete cells and are final quantization errors if they are calculated based on complete cells as mentioned above.

As also mentioned above, furthermore, another preferred embodiment which may be but has not to be combined with the aforementioned embodiment is to postpone the error propagation until a desired certainty of the color reproduction is achieved. It is proposed to do so by decoupling the quantization and error propagation task and therefore to propagate the resulting quantization error at a process pixel preferentially not immediately after the quantization but later on in the algorithm. We call this lazy propagation.

At the beginning of the algorithm, we assume a desired *reproduction certainty threshold* to be given. The pixel values of the image pixels of the three images are initialized as follows: All pixel values of the image pixels of the image I are initialized with the color values of an image which is passed to the algorithm. The pixel values (process color values) of all image pixels (process pixels) in E are initialized with the pixel values (input color values) of the corresponding image pixels (input pixels) in *I*. The pixel values (output color values) of all image pixels in *O* are uninitialized and are marked as "not fixed".

We describe three tasks:

    1. Visiting strategy: The order of visiting all process pixels in a process image (E)
    2. Quantization: How to determine which binary output color value to use at the current output pixel
    3. Propagation: When and how to propagate a quantization error

We state at first, that these three tasks may preferably not be executed in the order as they appear in this list. They define separated tasks.

The three tasks are executed in the following way: The complete algorithm visits every process pixel of the image. The visiting of a single pixel is called a *step*. The visiting strategy (1) defines a sequential order of which pixel coordinate to visit for the first and every consecutive step. The description of possible visiting strategies can be found in section 6.1.

For every step, the following happens: The process pixel visited in the current step is called the *current process pixel*. The quantization task (2) marks the current process pixel as fixed and chooses (selects) an output binary color value for the current output pixel. The detailed description of the quantization task can be found in section 6.2. The chosen (selected) output binary color value will be set in the output binary image (O) at the coordinate of the current output pixel and will, according to a preferred embodiment, never be changed again.

As a consequence of fixing the current process pixel, after the quantization task the prediction certainty of zero or more output image cells containing the current output pixel may have become higher or equal to the certainty thereshold value or the output image cells may have become complete. For those output image cells, the quantization error (of the process pixel corresponding to the output pixel to which the output image cell is assigned) gets propagated to neighboring process pixels in a propagation task (3) which is described in detail in section 6.3.

**6.1 Visiting strategies**

Visiting strategies describe the order (sequence) of processing the process pixels of a process image. When one of the process pixels becomes a current process pixel, that one is considered to be visited. After determining the output binary color value for that one of the pixels (e.g. by selection), the visit is over and the next process pixel will be visited according to a visiting order. Visiting strategies result in the visiting order.

It is referred to the visiting strategies listed in patent application 08169146.1-1228 with the following additional notes:

When natural images (like photographs) are judged, the visiting strategy from the upper left to the lower right corner has shown the most satisfying visual results with low noise and good sharpness and very good error distribution. But in areas of slow gradients, disturbing artifacts may occur.

Visiting the process pixels along to their gradient has shown very good sharpness, although depending on the configuration parameters, the processing resulted in a sharpening effect that was too strong.

When large unicolor areas need to be halftoned, the random visiting strategy has shown the most stable results with lowest artifacts. Although, this visiting strategy results in bad error distribution so that conservation of energy is questionable and disturbing noise occurs.

**6.1.1 Additional visiting strategy definitions**

Additionally to the referred strategies above, we note the following additions:

For color images, the computation of the gradient image is not a trivial task, we therefore propose the following embodiments:

1. Embodiment: Create a greyscale representation of the color image representing the luminance of the colors. This can for example be the L-channel of the Lab color space or the V-channel of the HSV space. The gradient image will be computed out of that greyscale image.

2. Embodiment: Create a gradient image for each separated channels of the input image and combine the resulting gradient images into one gradient image using an appropriate operation like the max-operator or an average-operator.

3. Embodiment: When judging natural images, we observed that color values close to the gamut boundary of a color space tend to show bigger gradients. We therefore define the gradient image to be a saturation representation of the image (like, for example, the S-channel of the HSV space). For images with strong luminance contrast, a grey level representation of the image (like, for example, the V-channel of the HSV space) can be used but the values need to be adjusted so that values near the boundaries of the gamut represent high contrast values and the values far off the boundaries represent low contrast values. For example, when a grey image representation value v lies between 0 and 1, a saturation value $s$ thereof can be computed using $s = |2v - 1|$.

4. Embodiment: As gradient images often are very noisy, the resulting gradient image of the previous embodiments may be blurred for example with a gaussian, median or mean filter.

5. Embodiment: All previous embodiments are considered to represent continuous data. In this further embodiment, the values of the gradient image are discretized to a given number of levels.

We tested further possible visiting strategies: Along a threshold, along the interim quantization error, along the propagation error, along the certainty of prediction.

We note that most of the visiting strategies described here and in the aforementioned patent application require a structure to store the visiting order of the pixels. We solve this using a heap structure (which is a common well-known data structure) to store an event list of when which process pixel needs to be visited. A heap structure allows to manipulate the visiting order when needed, like, for example, when the visiting strategy along the interim quantization error is used, which changes after every step. One possibility is to create this event list once at the beginning of the whole algorithm, inserting all process pixels into the heap at once. Another possibility is to insert the pixels one by one, starting with a specific pixel (for example, the process pixel in the upper left corner, or the process pixel in the middle of the process image) and after visiting this process pixel, all neighboring process pixels are inserted into the heap (if they are not yet in the heap or already visited). This second possibility has been observed to result in visually good results when working with gradient strategies.

Other data structures to store the visiting order may also work.

**6.2 Quantization**

In the quantization step, first, preferably, the current process pixel gets marked as fixed. Then, every possible output binary color value for the current output pixel (which corresponds to the current process pixel) gets examined. In the following, one pass with one output binary color value (which is called the *current output binary color value)* is described: The output binary color value of the current output pixel is set to the current output binary color value. Every output pixel defining an output image cell which contains the current output pixel here is called an indirect-surrounding output pixel. For every indirect-surrounding output pixel, the reproduction color then is predicted with the methods described in section 6.4. The difference between the predicted reproduction color and the desired color value of the indirect-surrounding output pixel results in the provisional quantization error of the indirect-surrounding output pixel. The main idea of this invention is to sum up the length of these provisional quantization errors of all indirect-surrounding output pixels, which results in a "total quantization error length" for the current output binary color value. This "total quantization error length" serves as an error indication. An extension to this method is to weight the provisional quantization error lengths of the indirect-surrounding output pixels with the corresponding prediction certainty of the indirect-surrounding output pixel and other weights like for example the distance of the current output pixel to the indirect-surrounding output pixel or the indirect cell influence values.

The total quantization error length of all possible (or of a predetermined set of) current binary output color values are computed. That one binary output color value out of the previously determined current binary output color values is selected which shows the smallest "total quantization error length" (i.e. smallest error indicator). The output binary color value of the current output pixel then gets set with this selected output binary color value. Then, the quantization step is over for the current output pixel. Preferably, the output binary color value will never be changed again for the current output pixel. The latest quantization errors (in particular the interim quantization errors) of all indirect surrounding output pixels of the current output pixel are recomputed according to the selected output binary color value.

**6.3 Propagation**

In the propagation task, the quantization error (error color value) of a specific process pixel will be distributed to neighboring process pixels. This propagation will be done exactly once per pixel meaning the quantization error color value will be propagated at one particular step and no error color value will be propagated at the specific process pixel in any consecutive or previous steps. Therefore conservation of energy is granted. A specific output pixel corresponds to the specific process pixel. One part of this invention declares that the propagation step may be postponed until a high certainty of color prediction for an output image cell which includes the specific output pixel as anchor pixel is reached. Any further step of the whole algorithm will therefore have a neglectable influence on the quantization error (error color value) at the specific process pixel or even no influence at all.

Therefore, the propagation of the quantization error (error color value) of the specific process pixel will be done only either if, after the preceding quantization step, the output image cell of the specific output pixel (which corresponds to the specific process pixel) became complete or the prediction certainty of the output image cell became higher or equal to the given certainty threshold value. In the further text, we call such a specific process pixel a *certain process pixel*. When the output image cell has been completed, the latest quantization error becomes a final quantization error. This final quantization error will be used for the propagation. If the cell has not been completed but the prediction certainty of the output image cell became sufficiently high (higher or equal to the certainty threshold value), the latest quantization error (which is an interim quantization error) will be used for the propagation. In either case, all previous quantization errors of the certain pixel are discarded, only the current (latest) quantization error (which in the first case is the final quantization error) will be propagated.

The latest quantization error of the specific pixel gets propagated to the neighbouring process pixels (which represent targets for the propagation process). The term "neighbouring" has already been defined above. Thus, for instance, a neighbouring process pixel may be in particular somewhere near the specific process pixel whereas "near" is declared to be within a distance from the specific process pixel with a lower pixel radius (e.g. 1, 2 or 3) up to a higher pixel radius (e.g. 3, 4, 5, 6, 7, 8, 9 and 10). The weight of how much of the quantization error will be propagated to a neighbouring process pixel is defined according to weightings formerly defined in patent application EP 08169146.1 and some new possible weightings: Color difference based weighting, gradient based weighting, gradient direction based weighting, cell influence based weighting, prediction certainty based weighting.

Prediction certainty based weigthing is used for propagating errors only to process pixels which are not too certain yet. With the certainty models described in section 6.4.5, one can define the certainty based weigthing for a process pixel for example according ot the following formula:

$$w = 1 - \text{certainty}$$

This has the effect, that fully certain process pixels (process pixels with certainty = 1) will not be considered as a target of the propagation process at all. Almost-certain process pixels will have a smaller fraction of the quantization error propagated to than pixels with a low certainty.

The quantization error of the specific process pixel is distributed to all neighbouring process pixels according to their propagation weight which means in other words that the sum of the propagated error-parts to all neighboring process pixels of a specific process pixel preferentially is equal to the quantization error of the specific process pixel.

A possible additional constraint for the propagation is to ensure that after the distribution of the error to the neighboring process pixels, the desired color (i.e. the process color value) of any neighbouring process pixel must not be out of gamut. If so, the desired color of that process pixel will be set to an appropriate in-gamut-color and the exceeding part of the weighted quantization error of the specific process pixel propagated to that neighboring process pixel is declared to be "unpropagatable" (as it exceeded the color space of the pixel). The sum of all unpropagatable error parts remains as the total unpropagatable error of the specific process pixel.

The lower and higher pixel radius, within which the neighbouring process pixel are confined, can be defined arbitrarily. The difference of the higher to the lower pixel radius is called the propagation width. A possible extension of the propagation step is that, if after the propagation, there is a total unpropagatable error remaining as an unresolved property of the specific process pixel, the step is repeated with the remaining unpropagatable error but with a lower and higher propagation radius greater than the higher radius of the previous try until no more unpropagatable error is existant, no more pixel exists which could be used as a propagation target, or a predefined maximal pixel radius is reached. The step therefore starts with a minimal pixel radius and ends with a maximal pixel radius.

The minimal pixel radius should be chosen so that can be ensured that no error will be propagated to a process pixel which is part of a process image cell defined by the specific process pixel. If this would be the case, the error propagation of the process pixel would influence itself and therefore conservation of energy could not be granted anymore. The maximal radius should be chosen so that it is "small enough" which means that the error can only be propagated up to a certain distance. This value should be chosen appropriately according to the given setup, for example by determing the maximal influence distance of a dot printed on paper to another dot. The propagation width can be understood as the spread of the error. The smaller the propagation width, the sharper the resulting image.

At the end of the propagation step, either all of the error has been propagated, or the maximal pixel radius has been reached and there is a final remaining error which the algorithm is unable to propagate. When the error has been propagated completely, preferentially, the process color value of the propagated pixel is set to the reproduction color value, so that at this state of the algorithm, calculation of the quantization error of that pixel equals 0. If the error could not have been propagated completely, the reproduction color is set to the sum of the reproduction color value plus the remaining error so that calculation of the quantization error of that pixel equals the remaining error.

For the propagation of the quantization error, we refer to the methods listed in patent application EP 08169146.1 with the following additional notes:

**6.4 Color prediction**

For the quantization task (2) and for weighting strategies of the propagation task (3), the resulting color produced by reproducing given output image cells need to be predicted. Basic algorithms and possible extensions are described. In this section, we describe the prediction of a reproduction color value R of an output pixel at a position (x, y) to which an output image cell is assigned. The calculation of the (predicted) reproduction color value R is necessary in order to calculate the quantization errors, in particular the provisional quantization errors and the latest quantization error as mentioned above. The calculation of the (predicted) reproduction color value R is based on (binary) color values of the output pixels in the output image cell which is at the position (x, y). Therefore, in the following, the reproduction color value R of an output pixel to which an image cell is assigned, is also called "reproduction color value R of an output image cell". The output image cells assigned to the particular output pixels are called herein particular output image cells. Thus, according to an embodiment, a plurality of reproduction color values of particular output image cells are used in order to calculate the plurality of provisional quantization errors. These provisional quantization errors are used in order to calculate the error indicator.

We first define a variable *fixcount* describing the number of output pixels fixed in the output image cell. When the output image cell is completed, all output cell pixels are fixed and therefore the number of fixed output pixels of the output image cell is equal to m · n. The fixed output pixels of the output image cell are called in the following "fixed output cell pixel". When an output image cell is partially completed, the number of fixed output cell pixels must be counted. The case of 0 fixed output cell pixels can not occur as the prediction of an output image cell will only be made after at least one output pixel within the output image cell has been fixed.

Additionally, we define a *local cell influence filter* f' which is the same as the cell influence filter f but is set to 0 for output pixels which are marked as not-fixed. The value for output pixels which are not fixed may also be chosen arbitrarily.

$$f'(u,v) = \begin{cases} f(u,v) & when\,(x',y')\,fixed \\ 0 & otherwise \end{cases} \qquad (1)$$

Furthermore, we define a working color matrix *O''(u, v)* which contains the output binary color value O(x', y') of the corresponding output pixel if the output pixel at the position (x', y') is fixed, or a predefined color value *p* (see below) if the output pixel at the position (x', y') is not fixed. All colors in O' are converted to working color space.

$$O'(u,v) = \begin{cases} O(x',y') & when\,(x',\,y')\,fixed \\ p & otherwise \end{cases} \qquad (2)$$

Thus, the working color matrix O' (u, v) preferably gives a value for each position (u, v) of the output image cell. We propose the following values for *p*: A possible color value would be the zero-color or theoretically any color. Assuming that the whole algorithm in the end will eventually reproduce a color close to the desired color, good results can be achieved using the color value p = E(x, y) or p = E(x', y''). The same way, p = I(x, y) or p = I(x'', y'') may be applied. Another embodiment is to set *p* to a quantized version of the input color value of the corresponding input pixel or the process color value of the corresponding process pixel at position (x'', y''), meaning, an output binary color value is chosen which is close to the desired color (process color value) or the input color value at position (x'', y'') and then converted to working space. An additional embodiment is to set *p* to the same output binary color value as the output pixel which is at the opposite position (i.e. mirrored location) within the output image cell. The opposite position $(x_o, y_o)$ within an output image cell at position (x, y) is given by $(x_o, y_o) = (2x - x_o, 2y - y_o)$.

### 6.4.1 Linear color prediction of a cell

We define a *linear equally distributed prediction*: The reproduction color value *R* of an output pixel (to which an output image cell is assigned) is the sum of the values in the working color matrix divided by the number (fixcount) of fixed cell output pixels.

$$R = (\sum_{u,v} O'(u,v))/fixcount \qquad (3)$$

Good results can be achieved when p = zero-color.

### 6.4.2 Weighted color prediction of a cell

We define an *influence based prediction*: The reproduction color value *R* of an output pixel (to which an output image cell is assigned) is the convolution of the working color matrix values with the local cell influence filter divided by the total cell influence of all fixed output cell pixels.

$$R = \sum_{u,v} (O'(u,v) \cdot f'(u,v))/\sum_{u,v} f'(u,v) \qquad (4)$$

In other words, the color value of every fixed output cell pixel gets weighted with the corresponding influence value defined by the cell influence filter. Summing all up results in a weighted color value which gets normalized by dividing it by the total influence of all fixed output cell pixels. We note that this computation may result in a division-by-zero. This case must be covered separately.

As preferentially, f''(u, v) = 0 for non-fixed output pixels of the output image cell, the value of $p$ is irrelevant.

### 6.4.3 Weighted color prediction of a filled-up cell

We define an *influence based prediction of a completed output image cell or an output image cell assumed to be completed*: The reproduction color value $R$ of an output pixel (to which an output image cell is assigned) is the convolution of the values of the working color matrix color with the cell influence filter.

$$R = \sum_{u,v} (O'(u,v) \cdot f(u,v)) \tag{5}$$

In other words, the color value of every cell output pixel is assumed to be fixed and so the values of the working color matrix get weighted with the corresponding influence value defined by the cell influence filter. This prediction can be used for output image cells which are completed or are assumed to be completed using appropriate choices of $p$.

### 6.4.4 Measurement based color prediction of a filled-up cell

A further embodiment of color prediction is the incorporation of previously measured patches which represent a certain cell filling. The predicted color is therefore the measured color when reproducing the present cell filling defined by $O'$ with the desired reproduction device.

### 6.4.5 Model for the certainty of prediction

In the present invention, a model for the certainty of a color prediction of the reproduction color value R is needed. We present the following models where a value of 0 means no certainty and a value of 1 means full certainty of color prediction.
*Linear certainty*: The certainty of a color prediction is expressed as the number of fixed output pixels within an output image cell divided by the maximal number ($m \cdot n$) of fixed output pixels within an output image cell.

$$certainty = fixcount/(m \cdot n) \tag{6}$$

*Influence based certainty*: The certainty of a color prediction is equal to the sum of the cell influence values of all fixed pixels

$$certainty = \sum_{u,v} f'(u,v) \tag{7}$$

*Model based certainty*: A reproduction device may reproduce a certain dot arrangement slightly different depending on position, time and other constraints. Measurements or models for predicting the reproduction color of an output image cell may therefore reveal a certain uncertainty in the reproduction or deviations from a median color value. Such uncertainties may additionally be incorporated in the previous certainty-models by multiplying them with the reproduction certainty defined by the measurements or the model used for the color prediction.

### 7 Additional Comments

A cell (output image cell) may have arbitrary shape and the anchor pixel (anchor output pixel) may be defined arbitrary. Nonetheless, research has shown that the anchor pixel preferentially is located at the exact center position of the cell. For example, a quadratic 3 × 3 cell has an exact center position at (1, 1), a 2×2 cell has not. If the anchor pixel is not in the exact anchor position, the error propagation may be directionally dependant and the algorithm therefore could produce unwanted artifacts. Therefore, a rectangular cell having an odd number (larger than 1) of lines and columns is preferred.

Cell influence filters preferably resemble elliptical, circular or rectangular filters (like for example gaussian filters or box filters) depending the reproducing device used.

Depending on the image boundaries and the size of a cell, there exist image cells which are overlapping the image boundaries. Those *boundary cells* need to be treated accordingly.

To successfully run the whole halftoning algorithm, a previous gamut mapping of the input image is essential so that all colors in the image are reproducible by the reproduction device.

**Claims**

1. Image data processing method for processing input image data representing input color pixels of an input color image to be reproduced

   wherein the image data processing method uses an error diffusion process in order to produce output binary image data which represent an output binary image which represents a processed binary version of the input color image, the output binary image comprising output pixels having output binary color values;

   process pixels are determined by the error diffusion process, which process pixels constitute a process image and which respectively have a process color value,

   wherein the error diffusion process uses the process pixels in order to process the input color pixels step by step in order to stepwise determine the output binary values of the output pixels by quantization;

   wherein the process pixel determined from that one of the input color pixels which is processed in a current one of the steps is a current process pixel,

   **characterised in that** the following is performed in the current step:

   a) a current binary color value is set for a current output pixel which corresponds to the current process pixel;
   b) a plurality of reproduction color values of particular ones of the output pixels are respectively calculated based on output binary color values determined in previous steps and based on the current binary color value;
   c) an error indicator is determined based on a plurality of provisional quantization errors, said provisional quantization errors are calculated based on the differences between the reproduction color values of the particular output pixels and the process color values of the process pixels corresponding to the particular output pixels;

   wherein the steps a), b) and c) are repeated for different current binary color values; and, for quantization of the current pixel, that one of the different current binary color values is selected as output binary color value for the current output pixel for which the error indicator indicates the smallest error.

2. Image data processing method according to claim 1, wherein the error indicator is calculated from the plurality of provisional quantization errors by using a sum operator.

3. Image data processing method according to claim 1 or 2, wherein the particular output pixels are output pixels which have the current output pixel in their surrounding, wherein the surrounding of a pixel includes the pixel itself.

4. Image data processing method according to claim 3, wherein, in step b), the reproduction color values of the particular output pixels are calculated additionally based on assumed color values, said assumed color values being assumed for those output pixels in the respective surrounding of the respective particular output pixel which have not yet been determined in a previous step.

5. Image data processing method according to claim 4, wherein the assumed color value of the output pixels is at least one of the following: the process color value of the process pixel corresponding to the output pixel, zero, the input color value of the input pixel corresponding to the output pixel, the output binary color value of a mirrored output pixel, said mirrored output pixel having a location which is equal to the mirrored location of the not yet determined output pixel, said mirrored location resulting from mirroring the location of the not yet determined pixel at the location of the current pixel.

6. Image data processing method according to one of claims 3 to 5, wherein the surroundings of output pixels are defined by output image cells and particular output image cells are respectively assigned to the particular output pixels, wherein the particular output image cells include the current output pixel, and wherein the reproduction color values of the particular output pixels are respectively calculated based on the previously determined output binary color values of the output pixels in the respective particular output image cell.

7. Image data processing method according to claim 6, wherein the output binary color values and/or the assumed color values of the output pixels inside the particular output image cells are weighed in dependence on their location in the particular output image cell in order to obtain the reproduction color values of the particular output pixels.

8. Image data processing method according to one of the preceeding claims, wherein quantization errors, which resulted from the selected binary color values, are propagated from quantized process pixels to other not yet propagated process pixels only if the reproduction color values of the output pixels which correspond to the quantized process pixels have been determined to be based on a certainty of prediction which is above a certainty threshold value.

9. Image data processing method according to claim 8, wherein the certainty of prediction is calculated based on cell influence values which are determined for each output pixel of an output image cell based on whether an output binary color value has already been selected for the output pixel of the output image cell or not.

10. Image data processing method according to one of the two preceding claims, wherein the cell influence values are determined based on the location of the output pixels in the output image cell.

11. Image data processing method according to one of the preceding claims, wherein quantization errors are only propagated from one process pixel to another if the other process pixel is outside an image cell which corresponds to the output image cell based on which that reproduction color value has been calculated which was used for the calculation of the error to be propagated.

12. Program which when running on a computer or loaded in a computer causes the computer to perform the method as claimed in any of the preceding claims.

13. Data storage medium which stores the program of the preceding claim or signal wave which carries information representing the program of preceding claim or a computer in which the program of the preceding claim is loaded or stored or executed or which comprises the data storage medium.

14. Reproduction system including

a reproduction device,
the computer of claim 12, said computer including an interface for inputting the input image data and an interface for outputting the output binary image data to the reproduction device,
the reproduction device being constituted to reproduce the one or more output binary images based on the output binary image data.

Figure 1

| | | | | |
|---|---|---|---|---|
| (0,0) | (1,0) | (2,0) | (3,0) | (4,0) |
| (0,1) | (1,1) | (2,1) | (3,1) | (4,1) |
| (0,2) | (1,2) | (2,2) | (3,2) | (4,2) |
| (0,3) | (1,3) | (2,3) | (3,3) | (4,3) |
| (0,4) | (1,4) | (2,4) | (3,4) | (4,4) |

| | | | | |
|---|---|---|---|---|
| 0 | 0.02 | 0.04 | 0.03 | 0.01 |
| 0.01 | 0.05 | 0.07 | 0.06 | 0.04 |
| 0.03 | 0.08 | 0.1 | 0.08 | 0.05 |
| 0.01 | 0.05 | 0.07 | 0.06 | 0.04 |
| 0 | 0.02 | 0.04 | 0.03 | 0.01 |

(a) cell coordinates, anchor pixel      (b) influence values

Figure 2

Figure 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 08169146 A

- WO 0816914611228 A